# EUROPÄISCHE PATENTSCHRIFT

(11) **EP 2 148 778 B1**
(45) Veröffentlichungstag und Bekanntmachung des Hinweises auf die Patenterteilung: **06.07.2011**
(21) Anmeldenummer: 07722284.2
(22) Anmeldetag: 21.04.2007
(51) Int. Cl.: B32B 37/14, E04F 13/08

(54) **MEDIEN-FÜHRENDE LEITUNGEN ENTHALTENDE PANEEL SOWIE VERFAHREN ZU DESSEN HERSTELLUNG**
PANEL COMPRISING MEDIA-CONDUCTING LINES AND METHOD FOR THE PRODUCTION THEREOF
PANNEAU CONTENANT DES CONDUITES VÉHICULANT DES SUBSTANCES ET PROCÉDÉ APPROPRIÉ POUR LE PRODUIRE

(43) Veröffentlichungstag der Anmeldung: 03.02.2010
(73) Patentinhaber: Geta Gesellschaft für Entwicklung, Technik- Anwendung für Holz- und Kunststofferzeugnisse mbH, 88239 Wangen (DE)
(72) Erfinder: WIESCHERMANN, Jochen, 88682 Salem (DE)
(74) Vertreter: Kiessling, Christian
(86) Internationale Anmeldenummer: PCT/DE2007/000726
(87) Internationale Veröffentlichungsnummer: WO 2008/128488

(56) Entgegenhaltungen:
- EP-A- 0 512 646
- EP-A- 1 504 889
- WO-A-01/21906
- WO-A-2007/007134
- DE-A1- 10 019 315
- DE-A1- 19 640 263
- GB-A- 1 532 112
- GB-A- 2 428 628
- US-A- 5 701 621
- US-A1- 2003 157 301
- US-A1- 2003 168 763

## Beschreibung

Die Erfindung betrifft ein Verfahren zum Herstellen von medien-führenden Leitungen enthaltenden Paneelen mit mindestens einer Trägerschicht mit einer Ober- und einer Unterfläche und einer an die Unterfläche der Trägerschicht angrenzenden, eine Ober- und Unterfläche aufweisenden Schicht aus Kunststoffmaterial.

Paneele der eingangs genannten Art werden im Stand der Technik zu unterschiedlichsten Zwecken verwendet. Die bekannten Paneele sind dabei entweder massiv aus einem feuerfesten und auch bei hohen Temperaturen von bis zu 1000° Celsius nicht ausgasenden Material wie beispielsweise einem Metall hergestellt, das vergleichsweise schwer ist, oder sie sind massiv aus einem Kunststoffmaterial hergestellt, das vergleichsweise leicht ist, jedoch entweder nicht feuerfest ist und/oder sich bei hohen Temperaturen von bis zu 1000° Celsius verformt oder giftige Gase freisetzt. Des Weiteren sind Paneele aus Kompound-Materialien bekannt, die vergleichsweise leicht sind, jedoch bei hohen Temperaturen die Nachteile der beiden ersteren massiven Materialien in sich vereinen. Die bekannten Paneele sind daher für eine Verwendung als Trägerelemente und/oder als Schutzumhüllungen für medien-führende Leitungen nicht geeignet.

Derartige Paneele sind beispielsweise aus DE 100 19 315 A1 oder WO 01/21906A bekannt.

Aufgabe der Erfindung ist es deshalb, ein Verfahren zur Herstellung von Paneelen zu schaffen, die leicht sind und auch bei hohen Temperaturen von bis zu 1000° Celsius formstabil und nicht brennbar/feuerresistent sind und dabei als Trägerelement und/oder als Schutzumhüllung für medienführenden Leitungen verwendbar sind.

Erfindungsgemäß wird diese Aufgabe durch das in Patentanspruch 1 angegebene Verfahren gelöst.

Bevorzugte Ausführungsformen des erfindungsgemäßen Verfahrens sind Gegenstand der Unteransprüche.

Bei den gemäß dem erfindungsgemäßen Verfahren hergestellten Paneelen wird eine besonders effektive Dämpfung einer Wärmeleitung in Richtung ins Innere der Paneele erreicht, wodurch eine gegenüber dem Stand der Technik verbesserte, besonders wirksame Temperaturisolierung bei gleichzeitiger besonders ausgeprägter mechanischer Stabilität und Formbeständigkeit auch bei hohen Temperaturen gegeben ist. Aufgrund dieser Eigenschaften sind gemäß dem erfindungsgemäßen Verfahren hergestellte Paneele als Trägerelemente und/oder als Schutzumhüllungen für medien-führende Leitungen hochgradig geeignet.

Bei den gemäß dem erfindungsgemäßen Verfahren hergestellten Paneelen ist die Trägerschicht mit der Schicht aus Kunststoffmaterial zu einer festen, extrem formstabilen und temperaturenempfindlichen Kompound-Einheit verbunden, wobei die Schritte zum Einbetten der medien-führenden Leitungen in die erfindungsgemäße Paneel-Vorrichtung in das erfindungsgemäße Herstellungs-Verfahren integriert sind.

Die medienführenden Leitungen können dabei prinzipiell sowohl Flüssigkeiten als auch Gase führen, wobei als Flüssigkeiten insbesondere Wasser und Öle zu nennen sind und als Gase Luft oder CO2 Verwendungen finden können. Alternativ könnten die medien-führenden Leitungen auch einen Sprühnebel oder auch Wasserdampf und somit Erosole führen. Die Leitungen können dabei in unterschiedlichsten Ebenen in der Schicht aus Kunststoffmaterial geführt sein. Sie können daher insbesondere nahe einer Trägerschicht verlegt sein oder insbesondere auch in einem mittleren Bereich zwischen zwei parallel angeordneten Trägerschichten vorgesehen sein.

Ein Einlassöffnung und auch eine Auslassöffnung einer medien-führenden Leitung kann dabei sowohl im Bereich einer Stirnfläche eines entsprechenden Paneels vorgesehen sein, oder sie können alternativ auch durch eine Trägerschicht hindurch geführt sein. Eine Einlassöffnung bzw. eine Auslassöffnung kann mit einem Gewinde versehen sein oder alternativ mit einer Tülle als Schlauchanschluss versehen sein, wobei das Gewinde und die Tülle sowohl im Bereich einer Stirnfläche des Paneels als auch im Bereich einer Trägerschicht des Paneels angeordnet sein können.

Gemäß einer ersten bevorzugten Ausführungsform des erfindungsgemäßen Verfahrens ist vorgesehen, dass das zähflüssige Klebematerial durch Verflüssigen von Polyurethan bei einer Temperatur von 120°C bis 180°C erzeugt wird. Gemäß einer alternativen Ausführungsform kann vorgesehen sein, dass das zähflüssige Klebematerial von zähflüssigem Epoxitharz gebildet ist, das bei Raum-Temperatur durch Zusammenmischen von Bisphenol A und Epichlorhydrin mit einem Härter erzeugt wird.

Das zähflüssige Klebematerial kann auf die Unterfläche der Trägerschicht oder auf die Oberfläche der Schicht aus Kunststoffmaterial, oder alternativ auf die Unterfläche der Trägerschicht sowie auf die Oberfläche der Schicht aus Kunststoffmaterial aufgetragen werden. Gemäß einer wichtigen bevorzugten Ausführungsform des erfindungsgemäßen Verfahrens ist dabei stets vorgesehen, dass das zähflüssige Klebematerial mit Hilfe einer Walze auf die betreffende Schicht bzw. auf die betreffenden Schichten aufgetragen wird.

Gemäß einer weiteren wichtigen bevorzugten Ausführungsform des erfindungsgemäßen Verfahrens ist vorgesehen, dass das Verpressen der Trägerschicht mit der Schicht aus Kunststoffmaterial durch Wirkung eines technischen Vakuums erfolgt.

Gemäß einer besonderen bevorzugten Ausführungsform des erfindungsgemäßen Verfahrens ist vorgesehen, dass eine Trägerschicht sowohl auf die Oberfläche als auch auf die Unterfläche der Schicht Kunststoffmaterial aufgebracht wird, wobei eine oder mehr Leiterbahnen sowohl auf der Oberfläche als auch auf der Unterfläche der Schicht aus Kunststoffmaterial aufgebracht werden können.

Die im Zusammenhang mit dem erfindungsgemäßen Verfahren verwendeten Trägerschichten können beispielsweise aus Aluminium hergestellt sein. Eine Trägerschicht weist dabei vorzugsweise eine Dicke von etwa 0,3 mm bis 2,0 mm auf.

Die im Zusammenhang mit dem erfindungsgemäßen Verfahren verwendete Schicht aus Kunststoffmaterial kann vorzugsweise von einem festen Schaummaterial gebildet sein. Ein derartiges Schaummaterial weist vorzugsweise eine anisotrope Wabenstruktur mit langschmalen Röhrenwaben auf, deren jeweilige Längsachsen im Wesentlichen senkrecht zu ihrer Ober- und Unterfläche ausgerichtet sind. Diese entsprechende Schicht aus Schaummaterial ist vorzugsweise aus Polyetherimid oder aus Polyethersulfon hergestellt, wobei die Röhren dieser Schicht vorzugsweise eine Länge von 2 mm bis 50 mm bei einem Durchmesser von 0,1 mm bis 3,0 mm aufweisen. Die Schicht aus Kunststoffmaterial weist vorzugsweise eine Dicke von 3,0 mm bis 50 mm auf.

Gemäß einer weiteren wichtigen bevorzugten Ausführungsform des erfindungsgemäßen Verfahrens ist vorgesehen, dass das Bilden langgestreckter Aussparungen im Bereich der Oberfläche der Schicht aus Kunststoffmaterial durch Herauslösen, beispielsweise durch Ausfräsen von Material der Schicht aus Kunststoffmaterial erfolgt. Alternativ kann ein Herauslösen von Material der Schicht aus Kunststoffmaterial durch thermische Behandlung dieser Schicht mittels eines entsprechend geformten, erhitzten Stempels, insbesondere eine Kupferstempels erfolgen.

Gemäß einer weiteren wichtigen bevorzugten Ausführungsform des erfindungsgemäßen Verfahrens ist vorgesehen, dass das Füllmaterial von einem Schaummaterial gebildet wird, wobei das Füllmaterial insbesondere von einem Schaummaterial gebildet wird, das die gleiche Elastizität aufweist wie die Schicht aus Kunststoffmaterial.

Alternativ kann das Füllmaterial von einem Harz gebildet sein. Das Harz kann dabei von einem zu einer festen Substanz aushärtenden Polyurethan, Epoxit oder Polyester gebildet sein.

Des Weiteren alternativ kann das Füllmaterial von einem Kleber gebildet sein. Der Kleber kann dabei von einem zu einer elastischen Substanz aushärtenden Polyurethan oder Epoxit gebildet sein.

Die im Zusammenhang mit dem erfindungsgemäßen Verfahren verwendete medien-führende Leitung soll robust und wärmeunempfindlich sein. Sie kann beispielsweise aus einem Metall oder aus einem geeigneten Kunststoffmaterial hergestellt sein, wobei prinzipiell auch ein geeigneter elastischer Schlauch in Frage kommt.

Das erfindungsgemäße Verfahren wird im Folgenden anhand einer bevorzugten Ausführungsform eines so hergestellten Paneels erläutert, das in den Figuren der Zeichnung dargestellt ist. Darin zeigen:
- Fig. 1: eine bevorzugte Ausführungsform eines mittels des erfindungsgemäßen Verfahren hergestellten Paneels in einer Ansicht von schräg oben;
- Fig. 2: das in Fig. 1 dargestellte Paneel in einer Querschnittsansicht.

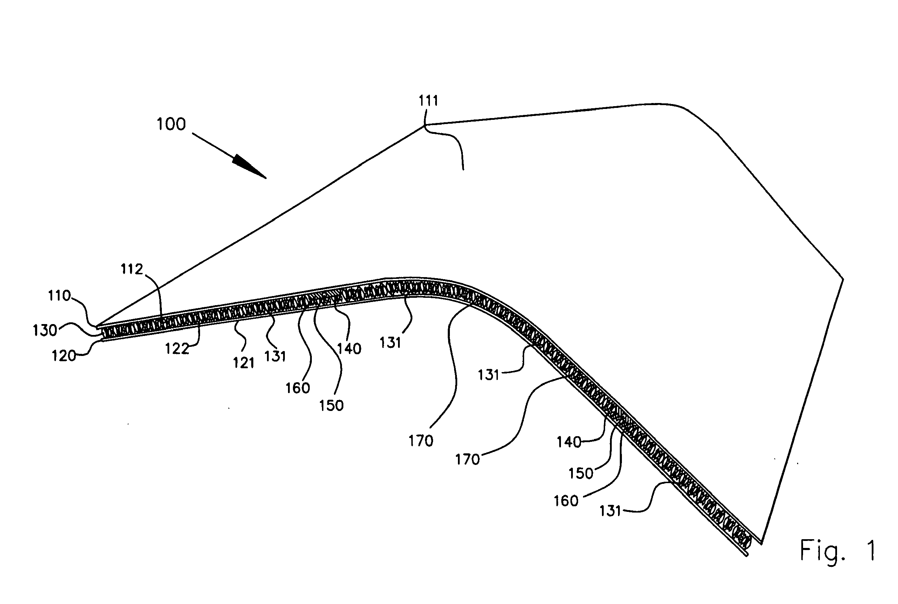

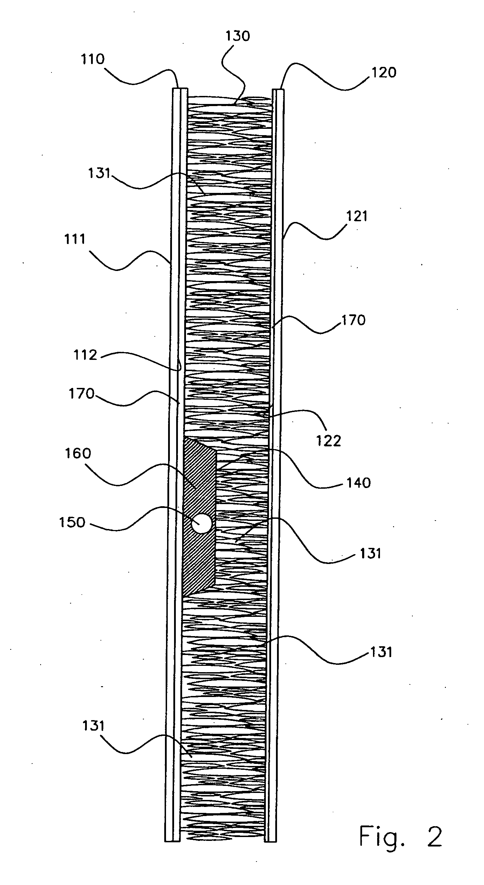

Das in den Figuren 1 bis 2 dargestellte Paneel 100 enthält mindestens eine Trägerschicht 110; 120 mit einer Ober- 111; 121 und einer Unterfläche 112; 122 und einer an die Unterfläche 112; 122 der Trägerschicht 110; 120 angrenzenden, eine Ober- und Unterfläche aufweisenden Schicht 130 aus Kunststoffmaterial, wobei
- im Bereich der Oberfläche der Schicht 130 aus Kunststoffmaterial langgestreckte Aussparungen 140 gebildet sind, in die eine oder mehr medien-führende Leitungen 150 eingebracht sind, wobei
- die langgestreckte Aussparung 140 mit Hilfe eines Füllmaterials 150 so weit aufgefüllt sind, dass eine insgesamt plane Oberfläche mit der Schicht 130 aus Kunststoffmaterial gegeben ist, und wobei
- die Unterfläche 112; 122 der Trägerschicht 110; 120 mit der Oberfläche der Schicht 130 aus Kunststoffmaterial mittels eines zähflüssigen Klebematerials 170 verbunden ist.

Das zähflüssige Klebematerial 170 ist von zähflüssigem Epoxitharz gebildet, das bei Raum-Temperatur durch Zusammenmischen von Bisphenol A und Epichlorhydrin mit einem Härter erzeugt ist und auf die Unterfläche 112; 122 der Trägerschicht 110; 120 sowie auf die Oberfläche der Schicht 130 aus elektrisch isolierendem Material aufgetragen ist.

Eine Trägerschicht' 110; 120 ist aus einem isotropen Kunststoffmaterial hergestellt und weist eine Dicke von etwa 1,0 mm auf. Die Schicht aus Kunststoffmaterial ist von einem festen Schaummaterial gebildet, das eine anisotrope Wabenstruktur mit langschmalen Röhrenwaben 131 aufweist, deren jeweilige Längsachsen im wesentlichen senkrecht zu ihrer Ober- und Unterfläche ausgerichtet sind. Die Schicht 130 aus festem Schaummaterial ist dabei aus Polyetherimid hergestellt und weist eine Dicke von 3,0 mm bis 50 mm auf, wobei die Röhren 131 der Schicht aus festem Schaummaterial eine Länge von 10 mm bei einem Durchmesser von 0,1 mm bis 3,0 mm aufweisen.

Das Bilden langgestreckter Aussparungen 140 im Bereich der Oberfläche der Schicht 130 aus Kunststoffmaterial ist durch Ausfräsen von Material der Schicht 130 aus Kunststoffmaterial erfolgt. Das Füllmaterial 160 von einem Harz, hier von einem zu einer festen Substanz aushärtenden Polyurethan gebildet.

Eine medien-führende Leitung 150 aus einem Metall hergestellt.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Verfahren zum Herstellen von Öl als Medium führenden Leitungen enthaltenden Paneelen (100), die bei hohen Temperaturen von bis zu 1000° Celsius formstabil und nicht brennbar sind und mindestens eine metallische Trägerschicht (110; 120) mit einer Ober- (111; 121) und einer Unterfläche (112; 122) und eine an die Unterfläche (112; 122) der Trägerschicht (110; 120) angrenzende, eine Ober- und Unterfläche aufweisende Schicht (130) aus einem Kunststoffmaterial aufweisen, mit die folgenden Schritte:
• Bilden langgestreckter Aussparungen (140) im Bereich der Oberfläche der Schicht (130) aus Kunststoffmaterial,
• Einbringen einer oder mehr Öl-führender Leitungen (150) in eine langgestreckte Aussparung (140),
• Auffüllen der langgestreckten Aussparung (140) mit Hilfe eines Füllmaterials (160) so weit, dass eine insgesamt plane Oberfläche der Schicht (130) aus Kunststoffmaterial im wesentlichen wieder hergestellt wird,
• Bereitstellen eines zähflüssigen Klebematerials (170),
• Auftragen des zähflüssigen Klebematerials (170) auf mindestens eine der Flächen (112; 122) der Trägerschicht (110; 120) und/oder der Oberfläche der Schicht (130) aus Kunststoffmaterial,
• Verpressen der Trägerschicht (110; 120) mit der Schicht (130) aus Kunststoffmaterial.

2. Verfahren nach Anspruch 1, **dadurch gekennzeichnet, dass** das zähflüssige Klebematerial (170) durch Verflüssigen von Polyurethan bei einer Temperatur von 120°C bis 180°C erzeugt wird.

3. Verfahren nach Anspruch 1, **dadurch gekennzeichnet, dass** das zähflüssige Klebematerial (170) von zähflüssigem Epoxitharz gebildet ist, das bei Raum-Temperatur durch Zusammenmischen von Bisphenol A und Epichlorhydrin mit einem Härter erzeugt wird.

4. Verfahren nach einem der Ansprüche 1 bis 3, **dadurch gekennzeichnet, dass** das zähflüssige Klebematerial (170) auf die Unterfläche (112; 122) der Trägerschicht (110; 120) aufgetragen wird.

5. Verfahren nach einem der Ansprüche 1 bis 3, **dadurch gekennzeichnet, dass** das zähflüssige Klebematerial (170) auf die Oberfläche der Schicht (130) aus Kunststoffmaterial aufgetragen wird.

6. Verfahren nach einem der Ansprüche 1 bis 3, **dadurch gekennzeichnet, dass** das zähflüssige Klebematerial (170) auf die Unterfläche (112; 122) der Trägerschicht (110; 120) sowie auf die Oberfläche der Schicht (130) aus Kunststoffmaterial aufgetragen wird.

7. Verfahren nach Anspruch 4, **dadurch gekennzeichnet, dass** das zähflüssige Klebematerial (170) mit Hilfe einer Walze auf die Unterfläche (112; 122) der Trägerschicht (110; 120) aufgetragen wird.

8. Verfahren nach Anspruch 5, **dadurch gekennzeichnet, dass** das zähflüssige Klebematerial (170) mit Hilfe einer Walze auf die Oberfläche der Schicht (130) aus Kunststoffmaterial aufgetragen wird.

9. Verfahren nach Anspruch 6, **dadurch gekennzeichnet, dass** das zähflüssige Klebematerial (170) mit Hilfe einer Walze auf die Unterfläche (112; 122) der Trägerschicht (110; 120) und auf die Oberfläche der Schicht (130) aus Kunststoffmaterial aufgetragen wird.

10. Verfahren nach einem der vorhergehenden Ansprüche, **dadurch gekennzeichnet, dass** das Verpressen der Trägerschicht (110; 120) mit der Schicht (130) aus Kunststoffmaterial durch Wirkung eines technischen Vakuums erfolgt.

11. Verfahren nach einem der vorhergehenden Ansprüche, **dadurch gekennzeichnet, dass** das Metall der Trägerschicht von Aluminium gebildet wird.

12. Verfahren nach einem der vorhergehenden Ansprüche, **dadurch gekennzeichnet, dass** eine Trägerschicht (110; 120) eine Dicke von etwa 0,3 mm bis 2,0 mm aufweist.

13. Verfahren nach einem der vorhergehenden Ansprüche, **dadurch gekennzeichnet, dass** die Schicht (130) aus Kunststoffmaterial von einem festen Schaummaterial gebildet wird.

## Claims

1. A method for producing panels (100) containing pipes adapted to conduct oil as the medium, which panels are dimensionally stable and incombustible at high temperatures of up to 1000 °C and comprise at least one metallic carrier layer (110; 120) having a top surface (111; 121) and a bottom surface (112; 122) and a layer (130) of a plastics material adjacent to said bottom surface (112; 122) of said carrier layer (110; 120), and exhibiting a top and bottom surface, by the following steps:
• forming long recesses (140) in the region of the top surface of said layer (130) of plastics material,
• introducing one or more oil-conducting pipes (150) in a long recess (140),
• filling said long recess (140) with a filling material (160) to an extent that an overall substantially plane surface of said layer (130) of plastics material is again produced,
• preparing a high-viscosity adhesive material (170),
• applying said high-viscosity adhesive material (170) to at least one of the surfaces (112; 122) of said carrier layer (110; 120) and/or to the top surface of said layer (130) of plastics material,
• compressing said carrier layer (110; 120) with said layer (130) of plastics material.

2. The method as defined in claim 1, **characterized in that** said high-viscosity adhesive material (170) is produced by liquefying polyurethane at a temperature of from 120 °C to 180 °C.

3. The method as defined in claim 1, **characterized in that** said high-viscosity adhesive material (170) is composed of high-viscosity epoxite resin produced at room temperature by mixing bisphenol A and epichlorohydrin with a curing agent.

4. The method as defined in any one of claims 1 to 3, **characterized in that** said high-viscosity adhesive material (170) is applied to the bottom surface (112; 122) of said carrier layer (110; 120).

5. The method as defined in any one of claims 1 to 3, **characterized in that** said high-viscosity adhesive material (170) is applied to the top surface of said layer (130) of plastics material.

6. The method as defined in any one of claims 1 to 3, **characterized in that** said high-viscosity adhesive material (170) is applied to the bottom surface (112; 122) of said carrier layer (110; 120) and also to the top surface of said layer (130) of plastics material.

7. The method as defined in claim 4, **characterized in that** said high-viscosity adhesive material (170) is applied to the bottom surface (112; 122) of said carrier layer (110; 120) with the aid of a roller.

8. The method as defined in claim 5, **characterized in that** said high-viscosity adhesive material (170) is applied to the top surface of said layer (130) of plastics material with the aid of a roller.

9. The method as defined in claim 6, **characterized in that** said high-viscosity adhesive material (170) is applied to the bottom surface (112; 122) of said carrier layer (110; 120) and to the top surface of said layer (130) of plastics material with the aid of a roller.

10. The method as defined in any one of the previous claims, **characterized in that** compression of said carrier layer (110; 120) with said layer (130) of plastics material is carried out by the action of a technical vacuum.

11. The method as defined in any one of the previous claims, **characterized in that** the metal of said carrier layer is aluminum.

12. The method as defined in any one of the previous claims, **characterized in that** a carrier layer (110; 120) has a thickness of from approximately 0.3 mm to 2.0 mm.

13. The method as defined in any one of the previous claims, **characterized in that** said layer (130) of plastics material is composed of a rigid foamed material.

## Revendications

1. Procédé de fabrication de panneaux (100) renfermant des conduits conducteurs d'huile en tant que milieu, ne se déformant pas à des températures élevées de jusqu'à 1000° Celsius, étant incombustibles et comprenant au moins une couche support métallique (110; 120) présentant une surface supérieure (111; 121), une surface inférieure (112; 122) ainsi qu'une couche (130) en matière plastique adjacente à la surface inférieure (112; 122) de la couche support (110; 120) et présentant une surface supérieure et une surface inférieure, comprenant les étapes suivantes:
• réalisation d'évidements allongés (140) dans la zone de la surface supérieure de la couche (130) en matière plastique,
• enchâssement d'un ou de plusieurs conduits conducteurs d'huile (150) dans un évidement allongé (140),
• comblement de l'évidement allongé (140) à l'aide d'un matériau de comblement (160) à tel point qu'une surface supérieure dans l'ensemble plane de la couche (130) en matière plastique est essentiellement rétablie,
• mise à disposition d'un matériau adhésif visqueux (170),
• application du matériau adhésif visqueux (170) sur au moins une des surfaces (112 ; 122) de la couche support (110; 120) et/ou de la couche (130) en matière plastique,
• assemblage par compression de la couche support (110; 120) avec la couche (130) en matière plastique.

2. Procédé selon la revendication 1, **caractérisé en ce que** le matériau adhésif visqueux (170) est produit par liquéfaction de polyuréthane à une température de 120° C à 180°C.

3. Procédé selon la revendication 1, **caractérisé en ce que** le matériau adhésif visqueux (170) consiste en de la résine époxyde visqueuse qui est produite par mélange à température ambiante de bisphénol A et d'épichlorhydrine avec un durcisseur.

4. Procédé selon une des revendications de 1 à 3, **caractérisé en ce que** le matériau adhésif visqueux (170) est appliqué sur la surface inférieure (112; 122) de la couche support (110; 120).

5. Procédé selon une des revendications de 1 à 3, **caractérisé en ce que** le matériau adhésif visqueux (170) est appliqué sur la surface supérieure de la couche (130) en matière plastique.

6. Procédé selon une des revendications de 1 à 3, **caractérisé en ce que** le matériau adhésif visqueux (170) est appliqué sur la surface inférieure (112; 122) de la couche support (110; 120) ainsi que sur la surface supérieure de la couche (130) en matière plastique.

7. Procédé selon la revendication 4, **caractérisé en ce que** le matériau adhésif visqueux (170) est appliqué à l'aide d'un rouleau sur la surface inférieure (112; 122) de la couche support (110; 120).

8. Procédé selon la revendication 5, **caractérisé en ce que** le matériau adhésif visqueux (170) est appliqué à l'aide d'un rouleau sur la surface supérieure de la couche (130) en matière plastique.

9. Procédé selon la revendication 6, **caractérisé en ce que** le matériau adhésif visqueux (170) est appliqué à l'aide d'un rouleau sur la surface inférieure (112; 122) de la couche support (110; 120) et sur la surface supérieure de la couche (130) en matière plastique.

10. Procédé selon une des revendications précédentes, **caractérisé en ce que** l'assemblage par compression de la couche support (110; 120) avec la couche (130) en matière plastique a lieu par l'effet d'un vide technique.

11. Procédé selon une des revendications précédentes, **caractérisé en ce que** le métal de la couche support est constituée par de l'aluminium.

12. Procédé selon une des revendications précédentes, **caractérisé en ce qu'**une couche support (110 ; 120) présente une épaisseur d'environ 0,3 mm à 2,0 mm.

13. Procédé selon une des revendications précédentes, **caractérisé en ce que** la couche (130) en matière plastique est constituée par une mousse dure.
